Europäisches Patentamt

European Patent Office

Office européen des brevets

(11) Veröffentlichungsnummer: **0 106 186 B1**

(12) **EUROPÄISCHE PATENTSCHRIFT**

(45) Veröffentlichungstag der Patentschrift:
**01.04.87**

(21) Anmeldenummer: **83109253.1**

(22) Anmeldetag: **19.09.83**

(51) Int. Cl.⁴: **G 01 B 5/08,** G 01 B 7/12,
**B 23 B 47/00,** H 02 P 7/62

(54) Handwerkzeugmaschine, insbesondere Bohrmaschine.

(30) Priorität: **07.10.82 DE 3237158**

(43) Veröffentlichungstag der Anmeldung:
**25.04.84 Patentblatt 84/17**

(45) Bekanntmachung des Hinweises auf die Patenterteilung:
**01.04.87 Patentblatt 87/14**

(84) Benannte Vertragsstaaten:
**CH DE FR GB LI NL**

(56) Entgegenhaltungen:
**EP - A - 0 018 465**

(73) Patentinhaber: **ROBERT BOSCH GMBH, Postfach 50, D-7000 Stuttgart 1 (DE)**

(72) Erfinder: **Hornung, Friedrich, Dipl.-Ing., Am Ochsenwald 10A, D-7000 Stuttgart 80 (DE)**
Erfinder: **Paule, Kurt, Dipl-Ing., Lauxweg 19, D-7000 Stuttgart 75 (DE)**
Erfinder: **Schädlich, Fritz, Dipl.-Ing., Panoramastrasse 4, D-7022 Leinfelden-Echterdingen (DE)**

ACTORUM AG

## Beschreibung

### Stand der Technik

Die Erfindung geht aus von einer Handwerkzeugmaschine nach der Gattung des Hauptanspruchs. Es ist schon eine solche Handwerkzeugmaschine aus EP-A1 0 018 465 bekannt. Dort wird die Stellung der Spannbacken eines Bohrfutters durch einen Taster ermittelt, der den ertasteten Wert an eine Steuereinrichtung für den Motor der Handwerkzeugmaschine weitergibt. Die Drehzahl dieses Motors wird entsprechend dem so indirekt ermittelten Schaftdurchmesser des in das Bohrfutter eingespannten Bohrerschaftes gesteuert. Bei oft vorkommenden abgestuften Bohrerschäften und bei Bohrern, deren Schneiden über den Durchmesser des eigentlichen Bohrerkörpers hinausragen (Hartmetallbohrer) entspricht der eingesteuerte Schaftdurchmesser nicht dem Arbeitsdurchmesser des Bohrers. Fehleinstellungen sind hier unvermeidlich. Die angegebene Handwerkzeugmaschine mit der geschilderten Steuereinrichtung ist ausserdem nicht geeignet, dem mit ihr Arbeitenden eine Information über den Durchmesser des eingespannten Bohrers zu geben.

### Vorteile der Erfindung

Die erfindungsgemässe Handwerkzeugmaschine mit den kennzeichnenden Merkmalen des Anspruchs 1 hat demgegenüber den Vorteil, dass der Arbeitsdurchmesser des Werkzeugs – hier des Bohrers – vor dem Einspannen in die Handwerkzeugmaschine eingegeben und angezeigt werden kann. Durch die vom Werkzeugspannelement getrennte Abtasteinrichtung kann der tatsächliche Arbeitsdurchmesser des Werkzeugs schnell ermittelt werden. Durch die Anzeige des Tastergebnisses wird der Bedienende über den Arbeitsdurchmesser informiert. Das zeitraubende Einspannen und gegebenenfalls nötige Wiederausspannen des Werkzeugs wird vermieden.

Durch die in den abhängigen Ansprüchen aufgeführten Massnahmen sind vorteilhafte Weiterbildungen und Verbesserungen der im Hauptanspruch angegebenen Handwerkzeugmaschine möglich. Besonders vorteilhaft ist es, dass die Handwerkzeugmaschine einen Taster mit einer Skala und einer Bezugsmarke hat, die die Stellung des Tasters abzulesen gestatten, und dass sie einen dem Taster zugeordneten elektronischen Wegmesser hat, dessen Ausgangswerte zur Motorsteuerung ausgewertet werden kann.

### Zeichnung

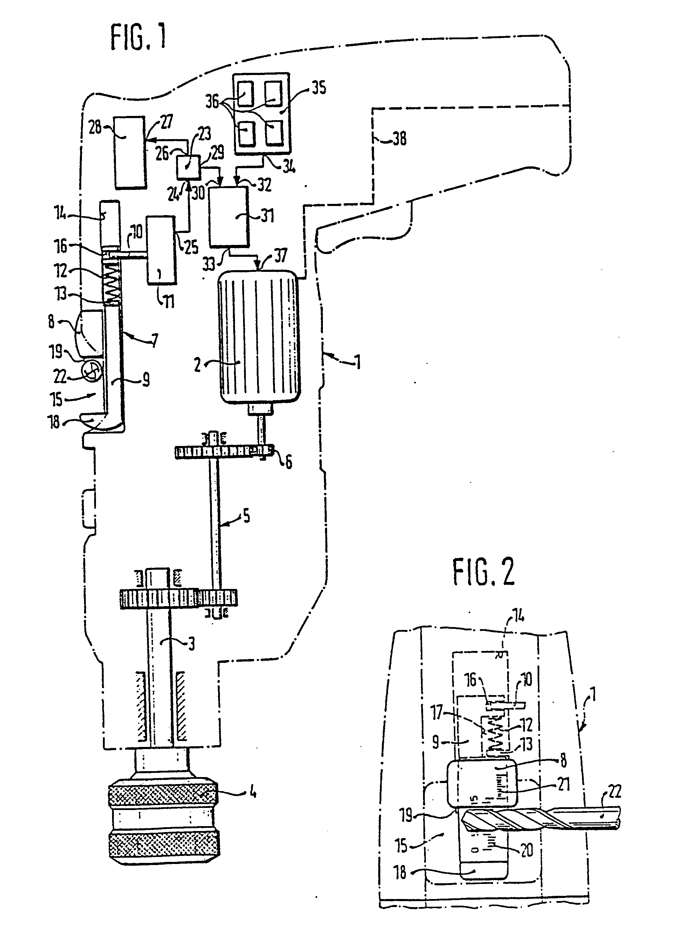

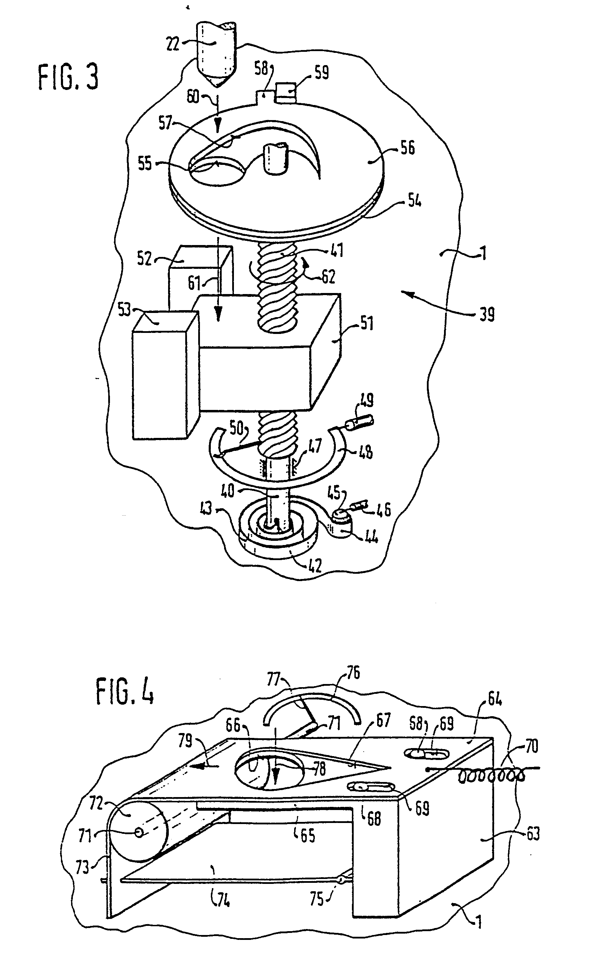

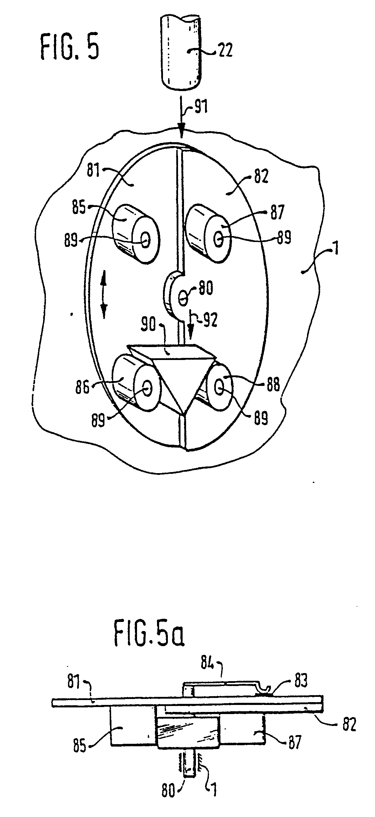

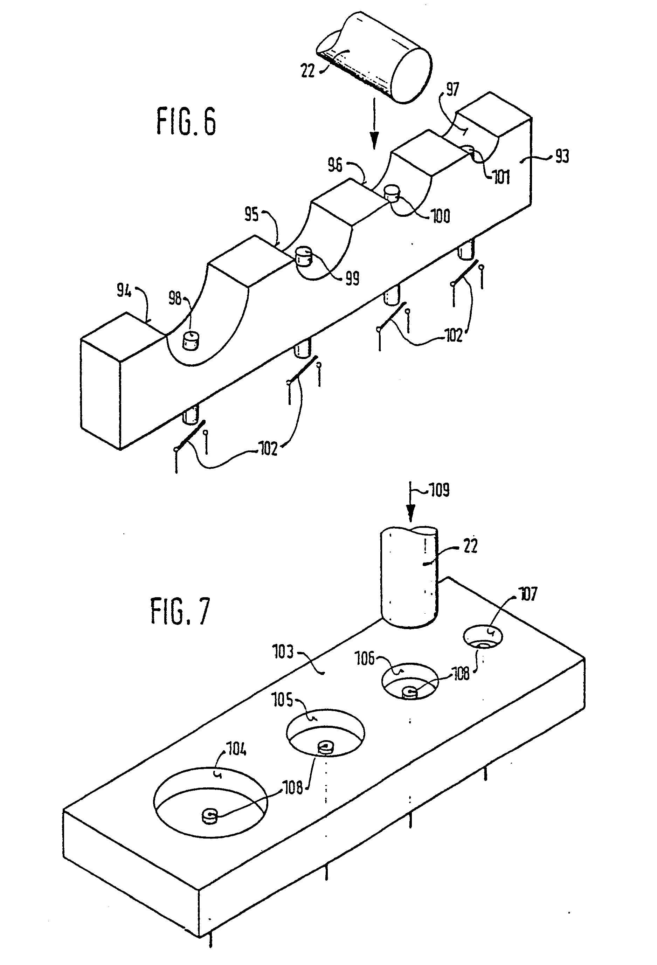

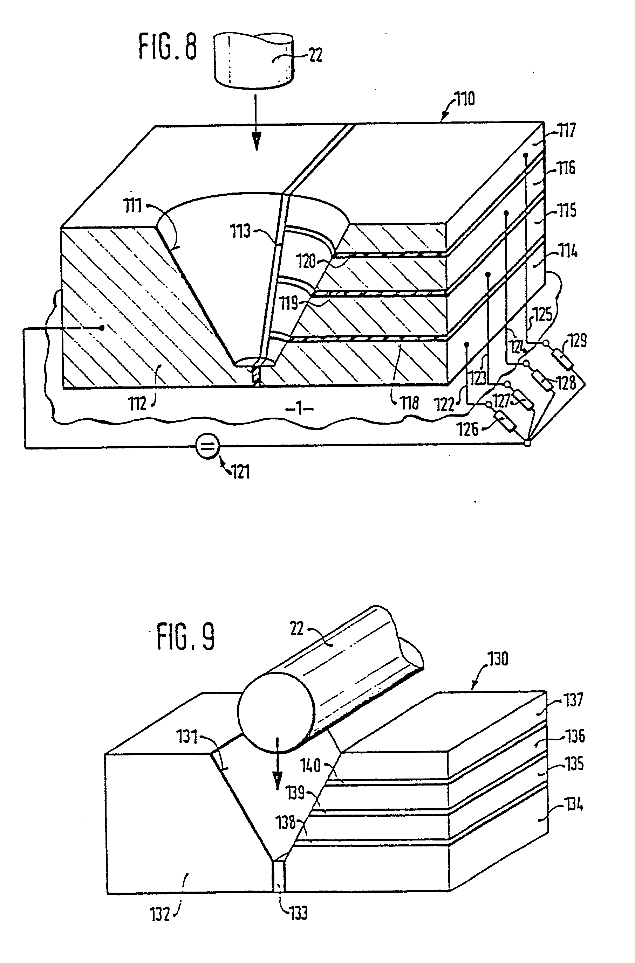

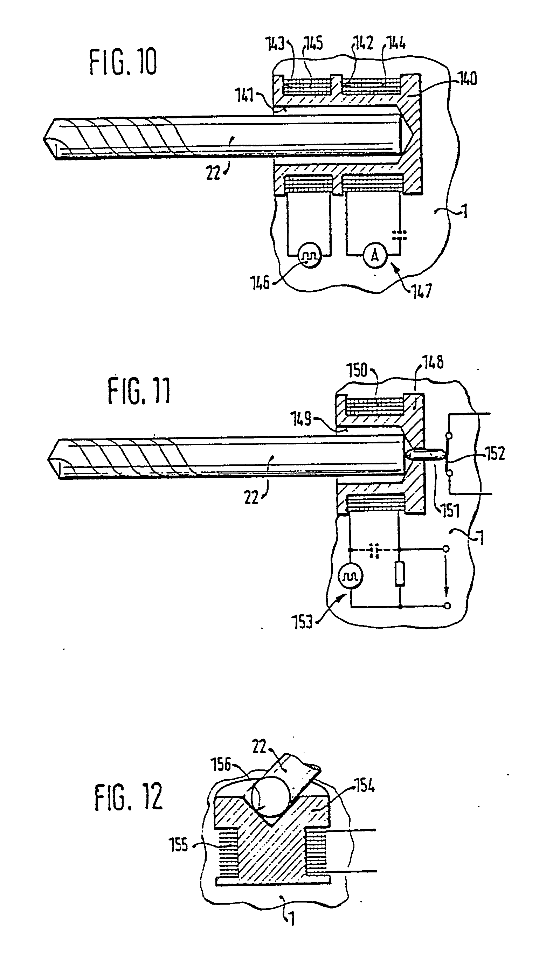

Mehrere Ausführungsbeispiele des Erfindungsgegenstandes sind in der Zeichnung dargestellt und in der nachfolgenden Beschreibung näher erläutert. Es zeigen Fig. 1 ein erstes Ausführungsbeispiel anhand einer Handbohrmaschine mit einem Tastschieber und diesem zugeordneten Anzeige-, Speicher- und Steuereinrichtungen, Fig. 2 eine Teilansicht von Fig. 1, Fig. 3 ein zweites Ausführungsbeispiel einer Abtasteinrichtung wie sie erfindungsgemäss in einer Handwerkzeugmaschine eingebaut werden kann, in perspektivischer Darstellung, Fig. 4 ein weiteres Ausführungsbeispiel einer Abtasteinrichtung in perspektivischer Darstellung, Fig. 5 ein weiteres Ausführungsbeispiel einer Abtasteinrichtung, die ohne Federn auskommt, in perspektivischer Darstellung, Fig. 6 ein Ausführungsbeispiel Einordnen von Werkzeugen in verschiedene Gruppen mit einem innerhalb dieser Gruppe zugelassenen Durchmesser, Fig. 7 ein anderes Ausführungsbeispiel zum gruppenmässigen Erfassen wie nach Fig. 6, in perspektivischer Darstellung, Fig. 8 eine Tasteinrichtung zum gruppenweisen Einordnen mittels einer Lehre mit einem kegelförmigen Trichter, in perspektivischer Darstellung, Fig. 9 eine letzte Ausführung für das gruppenweise Erfassen von Werkzeugdurchmessern mittels einer Lehre mit einer keilförmigen Vertiefung, in perspektivischer Darstellung, Fig. 10 ein Ausführungsbeispiel nach einem induktiven Messverfahren zum Ermitteln des Werkzeugdurchmessers durch HF-Koppelung, Fig. 11 ein weiteres Ausführungsbeispiel für induktives Ermitteln des Werkzeugdurchmessers durch Dämpfung und Fig. 12 ein Ausführungsbeispiel ähnlich Fig. 11 mit abgeändertem Aufbau.

### Beschreibung der Ausführungsbeispiele

In einem ersten Ausführungsbeispiel nach den Fig. 1 und 2 ist eine Handbohrmaschine 1 gezeigt. Sie umfasst einen Motor 2 und eine Bohrspindel 3 mit einem Bohrfutter 4. Der Motor 2 ist mit der Bohrspindel 3 über ein Vorgelege 5 verbunden, das von einem Motorritzel 6 angetrieben wird. Eine in diese Handbohrmaschine 1 eingebaute Abtasteinrichtung 7 besteht im wesentlichen aus einem als Lupe ausgebildeten Anschlagstück 8, einem Tastschieber 9, einer Koppel 10 und einem Messwert-Geber-Speicher 11. Der Tastschieber 9 ist unter die Wirkung einer Druckfeder 12 gestellt, die ihr Widerlager an einem Lappen 13 des Gehäuses der Handbohrmaschine 1 findet. Das Gehäuse der Handbohrmaschine 1 bildet auch eine Schieberführung 14, die bei 15 nach aussen hin offen ist. Die Koppel 10 greift in einen Schlitz 16 des Tastschiebers 9 ein und ist mit seinem anderen Ende innerhalb des Messwert-Geber-Speichers 11 geführt. Die Druckfeder 12 liegt innerhalb einer Aussparung 17 im Tastschieber 9. Das von der Druckfeder 12 abgewendete Ende des Tastschiebers 9 ist abgewinkelt und als Messbacken 18 ausgebildet. Dieser Messbacken 18 ragt durch die Öffnung 15 im Gehäuse der Handbohrmaschine 1 nach aussen. Er ist dem Anschlagstück 8 gegenübergestellt, das eine Messfläche 19 hat. An seiner nach aussen gewendeten Oberfläche trägt der Tastschieber 9 eine Skala 20. Dieser Skala 20 ist ein Nonius 21 zugeordnet, der an der dem Tastschieber 9 zugewendeten unteren Fläche des Anschlagstücks 8 angebracht ist. Die Druckfeder 12 sucht den Tastschieber 9 stets in seine Nullage zu bewegen, in der die Messfläche des Messbackens 18 an der Messfläche 19 des Anschlagstücks 8 anlegt. In Fig. 1 und Fig. 2 ist

2

der Tastschieber 9 in seine andere Endlage zurückgezogen, so dass der Abstand zwischen dem Messbacken 18 und der Messfläche 19 dem möglichen Messbereich des Tastschiebers 9 entspricht. Zwischen den Messbacken 18 und der Messfläche 19 ist ein Bohrer 22 so eingelegt, dass beim Loslassen des Tastschiebers 9 die Schneidkanten des Bohrers 22 den Abstand dem Messbacken 18 und der Messfläche 19 bestimmen. Dem Messwert-Geber-Speicher 11 ist ein Verteiler 23 nachgeordnet, dessen Eingang 24 mit dem Ausgang 25 des Messwert-Geber-Speichers 11 verbunden ist. Ein Ausgang 26 des Verteilers 23 ist mit einem Eingang 27 einer Anzeigeeinrichtung 28 verbunden. Ein zweiter Ausgang 29 des Verteilers 23 ist mit einem Eingang 30 einer Steuereinheit 31 verbunden, die einen weiteren Eingang 32 und einen Ausgang 33 hat. Der weitere Eingang 32 ist verbunden mit einem Ausgang 34 einer Eingabeeinrichtung 35. Die Eingabeeinrichtung 35 hat mehrere Eingabetasten 36, mit denen ein Wert für den Werkstoff des zu bearbeitende Werkstücks eingetastet werden kann. Der Ausgang 33 der Steuereinheit 31 ist mit einem Eingang 37 des Motors 2 verbunden. Die elektrische Verbindung von einer Energieversorgungsleitung über einen Drückerschalter zum Motor 2 ist durch eine gestrichelt eingezeichnete Linie 38 angedeutet. Sie entspricht dem Herkömmlichen.

Zum Messen und Eingeben des gemessenen Wertes in die Steuereinheit 31 wird der Bohrer 22 in der gezeigten Weise zwischen die Messbacken 18 und die Messfläche 19 eingelegt. Sobald der Messbacken 18 den an der Messfläche 19 anliegenden Bohrer 20 berührt, kann der dem Arbeitsdurchmesser des Bohrers 22 entsprechende Wert mittels des Nonius 21 an der Skala 20 abgelesen werden. Die so erreichte Stellung des Tastschiebers 9 wird über die Koppel 10 auf den Messwert-Geber-Speicher 11 übertragen, der einen entsprechenden analogen oder digitalen Wert an den Verteiler 23 weitergibt. Vom Verteiler 23 kommt dieser Wert zur Anzeigeeinrichtung 28, an der der gleiche Messwert digital abgelesen werden kann. Der vom Verteiler 23 zur Steuereinheit 31 weitergegebene Wert bewirkt zusammen mit dem Wert, der von der Eingabeeinrichtung 35 her der Steuereinheit 31 zugeführt wird, eine Ausgangsgrösse, die den Motor 2 optimal einstellt. Die lupenförmige Ausbildung des Anschlagstücks 8 erleichtert das Ablesen der Stellung des Nonius 21 zur Skala 20. Selbstverständlich können die beiden Anzeigen des abgetasteten Durchmessers auch allein verwendet werden. Dann wird entweder die Skala 20, der Nonius 21 und die lupenförmige Ausbildung des Anschlagstücks 8 oder die Anzeigeeinrichtung 28 eingespart. Es wäre weiterhin auch denkbar, die Abtasteinrichtung 7 und die Anzeigeeinrichtung mittels Skala 20 und Nonius 21 allein zu verwenden und auf die direkte Eingabe des ermittelten Abtastwertes in die Motorsteuerung zu verzichten. Die Drehzahleinstellung müsste dann in bekannter Weise manuell erfolgen.

Im Ausführungsbeispiel nach Fig. 3 ist die Abtasteinrichtung 7 durch eine Abtasteinrichtung 39 ersetzt. Im Gehäuse der Handbohrmaschine 1 lagert eine Spindel 40 mit einem Steilgewinde 41. Diese Spindel 40 ist drehbar aber nicht axial verschiebbar gelagert. In einen Schlitz 42 am unteren Ende der Spindel 40 greift ein innerer Lappen einer Spiralfeder 43 ein. Deren äusseres Ende bildet eine Öse 44, die einen gehäusefesten Stift 45 umschliesst. Ein am Stift 45 angreifend gezeigtes Kabelende 46 symbolisiert den Masseanschluss einer elektrischen Messstrecke. Oberhalb der Spiralfeder 43, auf einem Lager 47 für die Spindel 40, ist eine Widerstandsbahn 48 aufgebracht. Das Ende der Widerstandsbahn 48 ist mit einem Kabelende 49 verbunden, das die Verbindung von der Widerstandsbahn 48 zu einem Messwert-Geber-Speicher entsprechend dem Messwert-Geber-Speicher 11 symbolisiert. Eine mit der Spindel 40 fest verbundene Kontaktzunge 50 liegt auf der Widerstandsbahn 48 auf. Sie kann deren gesamte Länge überstreichen. Auf das Steilgewinde 41 ist ein Treiber 51 aufgeschraubt. Er ist durch Gleitstücke 52 und 53 in Richtung der Längsachse der Spindel 40 bewegbar gefügt, am Sichdrehen um die Längsachse dieser Spindel 40 aber gehindert. Oberhalb des Steilgewindes 41 durchgreift die Spindel 40 eine gehäusefeste Scheibe 54, die senkrecht über dem Treiber 51 eine Öffnung 55 hat. Gleichachsig mit dieser Scheibe 54 lagert oberhalb dieser Scheibe 54 eine mit der Spindel 40 fest verbundene Scheibe 56. Diese Scheibe 56 besitzt eine sich keilförmig verjüngende, symmetrisch zu einer einem Kreisbogen um die Längsachse der Spindel 40 folgenden Linie angeordnete Öffnung 57, deren Symmetrielinie durch die Mittelachse der Öffnung 55 in der Scheibe 54 verläuft. Eine Nase 58 der Scheibe 56 und ein gehäusefester Anschlag 59 bestimmen die durch die Wirkung der Spiralfeder 43 angestrebte Endstellung der Scheibe 56 und damit der Spindel 40. In dieser Endstellung decken sich das Ende der Öffnung 57 und die Öffnung 55.

Ein in Richtung der Pfeile 60 und 61 durch die Öffnungen 57 und 55 hindurch geführter Bohrer 22 trifft auf die ihm zugewendete Oberfläche des Treibers 51. Übt man mit diesem Bohrer 22 Druck auf den Treiber 51 aus, so verdreht dieser über das Steilgewinde 41 die Spindel 40 gegen die Wirkung der Spiralfeder 43 in Richtung des Pfeiles 62. Diese Drehbewegung wird angehalten, sobald die sich verjüngende Öffnung 57 und die Öffnung 55 den Bohrer 22 festklemmen. Während der Drehbewegung der Spindel 40 ist die Kontaktzunge 50 über die Widerstandsbahn 48 geglitten und nimmt nach Ende dieser Drehbewegung eine vom Durchmesser des Bohrers 22 bestimmte Stellung ein. Der sich aus dem Stück der Widerstandsbahn 48 zwischen der Kontaktzunge 50 und dem Kabelende 49 ergebende Widerstandswert entspricht dem Bohrerdurchmesser. Er kann, wie im Ausführungsbeispiel nach den Fig. 1 und 2 dargestellt, zur Anzeige des Bohrerdurchmessers und zur Steuerung des Motors 2 ausgewertet werden.

Das Ausführungsbeispiel gemäss Fig. 4 entspricht im Prinzip dem nach Fig. 3. Ein gehäusefester Winkel 63 trägt ein biegsames Band 64. Der freie Schenkel 65 dieses Winkels 63 besitzt eine kreisförmige Öffnung 66. Diese ist deckungsgleich mit dem Ende einer sich ausgehend von einem Kreis keilförmig verjüngenden, zu einer in Verschieberichtung des Bandes 64 liegenden Geraden symmetrisch erstreckenden Öffnung 67. Zwei Stifte 68 im Winkel 63 greifen in Längsschlitze 69 des Bandes 64 ein. Eine Zugfeder 70 sucht das Band 64 stets in seiner Endstellung zu halten. Eine im Gehäuse gelagerte Welle 71 trägt eine Umlenkrolle 72, über die das Band 64 um 90° abgebogen geführt ist. Das abgebogene Ende 73 des Bandes 64 ist fest verbunden mit einer Schwenkplatte 74. Dieser wiederum lagert in einem gehäusefesten Scharnier 75. Eine Widerstandsbahn 76 entspricht der Widerstandsbahn 48 nach Fig. 3, eine Kontaktzunge 77 der Kontaktzunge 50 nach Fig. 3.

Ein in Richtung des Pfeiles 78 durch die Öffnungen 66 und 67 hindurchgeführter Bohrer 22 drückt auf die Schwenkplatte 74. Diese zieht das Band 64 gegen die Wirkung der Zugfeder 70 in Richtung des Pfeiles 79. Die Bewegung endet wie im Beispielsfalle nach Fig. 3 auch hier mit dem Festklemmen des Bohrers 22. Die dabei ausgeführte Drehbewegung der Umlenkrolle 72 mit der Welle 71 ist ein Mass für den Bohrerdurchmesser. Der durch die Kontaktzunge 77 auf der Widerstandsbahn 76 abgetastete Widerstand stellt dieses Mass elektrisch dar.

Im Ausführungsbeispiel nach den Fig. 5 und 5a ist im Gehäuse der Handbohrmaschine 1 eine Welle 80 gelagert. Diese Welle 80 trägt eine kreisrunde Scheibe 81 und eine halbrunde Scheibe 82. Die Scheibe 81 und die halbrunde Scheibe 82 liegen dabei dicht aneinander an. Der von der halbrunden Scheibe 82 abgewendete Rücken der Scheibe 81 trägt eine Widerstandsbahn 83. Eine Kontaktzunge 84, fest am Ende der Welle 80, tastet diese Widerstandsbahn 83 ab. Sowohl die Scheibe 81 als auch die halbrunde Scheibe 82 tragen zwei Rollen 85 und 86 bzw. 87 und 88. Diese Rollen 85 bis 88 lagern drehbar auf Stiften 89. Je eine Rolle jeder Scheibe, die Rolle 85 auf der Scheibe 81, die Rolle 87 auf der halbrunden Scheibe 82, sind oberhalb der Welle 80 einander gegenüberstehend angeordnet. In gleicher Weise unterhalb der Welle 80 angeordnet sind die Rollen 86 und 88. Zwischen die Rollen 86 und 88 ist ein Keil 90 eingelegt, dessen eine Spitze nach unten zeigt.

Ein in Richtung der Pfeile 91 und 92 zwischen die Rollen 85 und 87 eingeführter Bohrer 22 drängt diese Rollen nach aussen. Dabei schwenken die Scheibe 81 und die halbrunde Scheibe 82 um die Welle 80. Die somit näher zusammenrückenden Rollen 86 und 88 heben den Keil 90 an. Drückt das Ende des Bohrers 22 auf den Keil 90, so sucht dieser die Rollen 86 und 88 wieder auseinanderzudrücken. Dies ist solange möglich, wie Spielraum zwischen den Rollen 85 und 87 und dem Bohrer 22 ist. Liegen beide Rollen 85 und 87 fest am Bohrer an, ist die Einschiebebewegung des Bohrers 22 beendet. Die hier gezeigte Vorrichtung benötigt keine Feder zum Messen. Der Bohrerdurchmesser wird wie bei den vorausgegangenen Ausführungsbeispielen nach den Fig. 3 und 4 durch die von der Kontaktzunge 84 abgegriffene Widerstandsbahn 83 dargestellt.

Die Ausführungsbeispiele nach den Fig. 6 bis 9 dienen dem stufenweisen Erfassen von Bohrergruppen mit innerhalb der Gruppe unterschiedlichem Durchmesser.

Im Ausführungsbeispiel nach Fig. 6 ist hierzu eine kammartige Lehre 93 am Gehäuse der Handbohrmaschine 1 befestigt. Die Lehre 93 besitzt halbkreisförmige Ausnehmungen 94 bis 97. Diese halbkreisförmigen Ausnehmungen sind zwischen einem grössten Durchmesser und einem kleinsten Durchmesser abgestuft. Am Grund der Ausnehmungen 94 bis 97 lagern Schaltstifte 98 bis 101, die sämtlich in den Bewegungsbereich elektrischer Schalter 102 eingreifen können, um diese Schalter 102 zu schliessen.

Zum Messen bzw. Abtasten muss man hiermit der Ausnehmung für den kleinsten Bohrerdurchmesser (97) beginnen. Lässt sich mit dem für die Benutzung vorgesehenen Bohrer 22 der Schaltstift 98 der kleinstmöglichen Ausnehmung in Schliessstellung zu dem darunterliegenden Schalter 102 drücken, so gehört dieser Bohrer 22 zu der dieser Ausnehmung zugeordneten Gruppe. Ist das Drücken des Schaltstiftes 98 nicht möglich, muss in der nächst grösseren Ausnehmung versucht werden, usw.

Im Ausführungsbeispiel nach Fig. 7 ist am Gehäuse der Handbohrmaschine 1 eine Lehre 103 befestigt, bei der anstelle der Ausnehmungen 94 bis 97 nach der Ausführung gemäss Fig. 6 topfförmige Ausnehmungen 104 bis 107 verwendet sind. Am Grunde dieser topfförmigen Ausnehmungen 104 bis 107 befinden sich Kontaktstifte 108. Ein in Richtung des Pfeiles 109 eingeführter Bohrer 22 kann einen Kontaktstift 108 berühren, wenn er einen genügend kleinen Durchmesser hat, um in eine möglichst kleine der topfförmigen Ausnehmungen eingeführt werden zu können.

Die Messung muss in der gleichen Weise vorgenommen werden wie beim Ausführungsbeispiel gemäss Fig. 6.

Beim Ausführungsbeispiel nach Fig. 8 ist im Gehäuse der Handbohrmaschine 1 eine Lehre 110 angeordnet, die eine kegelförmige Vertiefung 111 hat. Eine Hälfte 112 der Lehre 110 ist einstückig ausgebildet. Die Hälfte 112 der Lehre 110 ist in Achsrichtung der kegelförmigen Vertiefung 111 von der anderen Hälfte der Lehre 110 durch eine Isolationsschicht 113 getrennt. Die zweite Hälfte der Lehre 110 ist geschichtet aus vier elektrisch leitenden Teilen 114 bis 117 mit jeweils dazwischen angeordneten Isolierschichten 118 bis 120. Ein elektrischer Anschluss einer Messstrecke 121 ist zur einstückigen Hälfte 112 der Lehre 110 geführt, während andererseits jedem der Teile 114 bis 117 ein solcher Anschluss zugeordnet ist. Das Teil 114 ist mit einem Anschluss 122, das Teil 115 mit einem Anschluss 123, das Teil 116 mit einem Anschluss 124, das Teil 117 mit einem Anschluss 125 versehen. Die Anschlüsse 122 bis 125 sind über Widerstände 126 bis 129 verschiedener Wertigkeit an die Messstrecke 121 angeschlossen. Je nach dem Durchmesser eines in die trichterförmige Vertiefung 111 eingesetzten Bohrers 22 wird der Messkreis von der Hälfte 112 zu einem der Teile 114 bis 117 geschlossen. Entsprechend dem Bohrerdurchmesser können an den Anschlüssen 122 bis 125 Signale direkt digital abgenommen werden.

Im Ausführungsbeispiel nach Fig. 9 wird gleiches erreicht wie im Ausführungsbeispiel nach Fig. 8. Anstelle der Lehre 110 ist eine Lehre 130 eingesetzt, die eine keilförmige Vertiefung 131 hat. Die Lehre 130 ist aufgebaut aus einer einstückigen Hälfte 132 und einer durch eine Isolierschicht 133 von ihr getrennte Hälfte mit geschichteten Teilen 134 bis 137, mit zwischengeschalteten Isolierschichten 138 bis 140. In diese Lehre 130 kann ein Bohrer 22 in Richtung eines Teiles 139 entweder senkrecht stehend oder liegend eingelegt werden. Die Messung entspricht der nach Fig. 8.

Die Ausführungen nach den Fig. 10 bis 12 behandeln induktive Messverfahren.

Im Ausführungsbeispiel nach Fig. 10 ist im Gehäuse der Handbohrmaschine 1 ein Trägerkörper 140 eingebracht, der einen zylindrischen Hohlraum 141 hat. Aussen ist dieser Trägerkörper 140 in zwei Wickelräume 142 und 143 unterteilt, in die zwei Spulen 144 und 145 eingewickelt sind. Die Spule 145 ist an eine Wechselspannungsquelle 146 angeschlossen, während die Spule 144 mit einer Messstrecke 147 verbunden ist. Die HF-Kopplung zwischen den beiden Spulen 144 und 145, die durch die Messstrecke 147 ermittelt werden kann, ist ein Mass für den Durchmesser des eingeführten Bohrers 22. Im Ausführungsbeispiel gemäss Fig. 11 ist in das Gehäuse der Handbohrmaschine 1 ein Trägerkörper 148 eingebracht. Dieser besitzt eine Ausnehmung 149 und trägt aussen eine Spule 150. Am Grund der Ausnehmung 149 ist ein Steuerstift 151 angebracht, der einen Schalter 152 schliessen kann. Mit dem Schalter 152 kann eine Versorgungsspannung z.B. für den HF-Generator 157 an einen Speicher geschaltet werden. Dies geschieht in erwünschter Weise immer kurzzeitig und nur dann wenn das Messsignal tatsächlich benötigt wird. Ein in die Ausnehmung 149 eingeführter Bohrer 22 verändert die Induktivität bzw. Dämpfung in der Spule 150 und damit den Messwert am Widerstand 158. Das Mass der Änderung ist ein Mass für seinen Durchmesser. Im Ausführungsbeispiel gemäss Fig. 12 ist anstelle des Trägerkörpers 148 ein Trägerkörper 154 in das Gehäuse der Handbohrmaschine 1 eingebettet. Dieser Trägerkörper 154 nimmt eine Spule 155 auf, die in gleicher Weise geschaltet ist wie die Spule 150 im Ausführungsbeispiel gemäss Fig. 11. Ein keilförmiger Einschnitt 156 dient der Aufnahme eines Bohrers 22. Je nach dessen Durchmesser dringt er mehr oder weniger tief in den Einschnitt 156 ein. Im gleichen Masse verändert sich die Dämpfung der Spule 155.

## Patentansprüche

1. Handwerkzeugmaschine, insbesondere Bohrmaschine, mit einer Abtasteinrichtung für den Durchmesser von in ihr verwendbaren Werkzeugen, dadurch gekennzeichnet, dass sie eine vom Werkzeugspannelement (4) getrennte Abtasteinrichtung (7, 39) und eine damit verbundene Einrichtung (20, 21; 28; 31) zum Anzeigen des ertasteten Durchmessers und/oder zum Regeln ihres Antriebsmotors (2) hat.

2. Handwerkzeugmaschine nach Anspruch 1, dadurch gekennzeichnet, dass sie einen Taster (9) mit einer Skala (20) und einer Bezugsmarke (21) hat, die die Stellung des Tasters (9) unmittelbar abzulesen gestatten.

3. Handwerkzeugmaschine nach Anspruch 2, dadurch gekennzeichnet, dass sie einen Nonius (21) zum genauen Ablesen der Stellung des Tasters (9) und der Skala (20) hat.

4. Handwerkzeugmaschine nach Anspruch 1, dadurch gekennzeichnet, dass sie eine elektronische Anzeige (28) hat.

5. Handwerkzeugmaschine nach Anspruch 1, dadurch gekennzeichnet, dass sie einen dem Taster (9, 56, 64, 85–88) zugeordneten elektronischen Wegmesser (11, 48/50, 76/77 und 83/84) hat.

6. Handwerkzeugmaschine nach Anspruch 1, dadurch gekennzeichnet, dass sie einen optoelektronischen Taster hat.

7. Handwerkzeugmaschine nach Anspruch 1, dadurch gekennzeichnet, dass sie eine Digitalanzeige (28) hat.

8. Handwerkzeugmaschine nach Anspruch 1, dadurch gekennzeichnet, dass sie eine Steuereinheit (130) zur Aufnahme des Abtastergebnisses hat und der Abtasteinrichtung (7, 39) eine Eingabeeinrichtung (35) zugeordnet ist, mit der dem zu bearbeitenden Werkstoff zugeordnete Daten zusätzlich in die Steuereinheit (31) eingegeben werden können und mit der aus der Kombination der eingegebenen Werkstoffdaten und des ermittelten Werkzeugdurchmessers der Antriebsmotor (2) der Handwerkzeugmaschine geregelt werden kann.

9. Handwerkzeugmaschine nach Anspruch 1, dadurch gekennzeichnet, dass eine der Abtasteinrichtung zugeordnete Gebereinheit (93, 103, 110, 130) stufenförmig aufgebaut ist, um Werkzeuge mit verschiedenen Durchmessern gruppenweise zu erfassen.

10. Handwerkzeugmaschine nach einem der Ansprüche 2 oder 3, dadurch gekennzeichnet, dass die Abtastskala (20) auf einem unter einer Lupe (8) geführten Taster (9) im Ablesebereich der Lupe (8) angebracht und die Lupe (8) mit einem Nonius (21) versehen ist.

11. Handwerkzeugmaschine nach einem der Ansprüche 4 oder 5, dadurch gekennzeichnet, dass der Taster (9, 56, 64) unter die Wirkung einer Feder (12, 43, 70) gestellt ist, die ihn stets in seine Null-Stellung drängt, die der Abschaltstellung für die elektrische Stromversorgung entspricht.

12. Handwerkzeugmaschine nach Anspruch 1, dadurch gekennzeichnet, dass sie eine Batterie aufnehmen kann, die die für den Betrieb der Abtast-Mess- und Anzeigeeinrichtung notwendige Spannung liefert.

13. Handwerkzeugmaschine nach Anspruch 1, dadurch gekennzeichnet, dass der Taster der Abtasteinrichtung eine keilförmige Blende (56/57, 64/67) ist.

14. Handwerkzeugmaschine nach Anspruch 13, dadurch gekennzeichnet, dass die Blende (56/57) eine von einem Kreis ausgehende, sich keilförmige verjüngende, symmetrisch zu einer einem Kreisbogen folgenden Linie angeordnete Öffnung (57) hat.

15. Handwerkzeugmaschine nach Anspruch 14, dadurch gekennzeichnet, dass die Öffnung (57) in einer Kreisscheibe (56) angeordnet ist, die sich um den Punkt drehen kann, der Mittelpunkt für die kreisförmige Symmetrielinie zur Öffnung (57) ist.

16. Handwerkzeugmaschine nach Anspruch 13, dadurch gekennzeichnet, dass die Öffnung (67) in eine Platte oder ein Band (64) eingebracht ist, die geradlinig verschiebbar sind, und dass die Öffnung (67) – ausgehend von einem Kreis – sich keilförmig verjüngend und symmetrisch zu einer in Verschieberichtung des Bandes (64) bzw. der Platte liegenden Geraden verläuft.

17. Handwerkzeugmaschine nach Anspruch 1, dadurch gekennzeichnet, dass mit dem Abtaster (9, 56, 64) ein Schleifkontakt (11, 50, 77) verbunden ist, der über eine Geberstrecke (48, 76) geführt ist.

18. Handwerkzeugmaschine nach Anspruch 1, dadurch gekennzeichnet, dass der Taster (80–82) der Abtasteinrichtung aus zwei gleichachsig (80) gelagerten Scheiben (81, 82) gebildet ist, die je zwei Rollen (85/86, 87/88) tragen, je eine (85, 87) oberhalb des Scheibenlagers (80) und je eine (86, 88) unterhalb des Scheibenlagers (80), von denen sich die jeweils oberen (85, 87) und die jeweils unteren (86, 88) mit einem Abstand gegenüberstehen und wobei zwischen die unteren Rollen (86, 88) ein Keil (90) eingelegt ist, dessen eine Spitze nach unten gerichtet ist.

19. Handwerkzeugmaschine nach Anspruch 18, dadurch gekennzeichnet, dass eine volle Scheibe (81) mit ihrer einen Fläche an einer Halbscheibe (82) anliegt und auf der von dieser Halbscheibe (82) abgewendeten anderen Fläche eine Geberbahn (83) trägt und dass die die beiden Scheiben (81, 82) verbindende Achse (80) in der Halbscheibe (82) befestigt ist und an ihrem durch die andere Scheibe (81) hindurchragenden Ende einen Schleifkontakt (84) zum Abtasten der Geberbahn (83) trägt.

20. Handwerkzeugmaschine nach Anspruch 1, dadurch gekennzeichnet, dass sie eine kammartige Lehre (93) mit halbkreisförmigen Ausnehmungen (94–97) mit verschiedenem Radius hat, an deren Grund federbelastete Taststifte (98–101) in die Ausnehmungen (94–97) hineinragen, die mit ihrem anderen, freien Ende in Wirkverbindung mit Schaltern (102) gebracht sind, diese beim Einlegen eines passenden Werkzeugs (22) in eine der Ausnehmungen (94–97) in Schliessstellung bringend, sonst diese in Offenstellung lassend.

21. Werkzeugmaschine nach Anspruch 1, dadurch gekennzeichnet, dass sie eine Lehre (103) mit topfförmigen Ausnehmungen (104–107) mit verschiedenem Durchmesser hat, an deren Grund Kontaktstifte (108) in die Ausnehmungen (104–107) hinragen, die mit ihrem anderen, freien Ende in Wirkverbindung mit einer Messschaltung gebracht sind, die jeweils mittels eines berührten Kontaktstiftes (108) geschlossen werden kann.

22. Handwerkzeugmaschine nach Anspruch 1, dadurch gekennzeichnet, dass sie eine Lehre (110) mit einer kegelförmigen Vertiefung (111) hat, die aus mehreren elektrisch leitenden Teilen (112, 114–117) mit zwischengelagerten Isolierschichten (113, 118–120) gebildet ist, die die kegelförmige Vertiefung (111) in Sektoren unterteilen, die in der Tiefe gestaffelt sind und die elektrischen Signalkreisen (121, 126–129) zugeordnet sind.

23. Handwerkzeugmaschine nach Anspruch 1, dadurch gekennzeichnet, dass sie eine Lehre (130) mit einer keilförmigen Vertiefung (131) hat, die aus mehreren elektrisch leitenden Teilen (132, 134–137) mit zwischengelagerten Isolierschichten (133, 138–140) gebildet ist, die die keilförmige Vertiefung (131) in Sektoren unterteilen, die in der Tiefe gestaffelt sind und die getrennten elektrischen Signalkreisen (121, 126–129) zugeordnet sind.

24. Handwerkzeugmaschine nach einem der Ansprüche 22 oder 23, dadurch gekennzeichnet, dass die kegel- oder keilförmige Vertiefung (111, 131) nur halbseitig durch Sektoren unterteilt ist, die in der Tiefe gestaffelt sind.

25. Handwerkzeugmaschine nach Anspruch 1, dadurch gekennzeichnet, dass sie eine Einrichtung (140–147, 148–153 und 154–156) zur induktiven Ermittlung des Werkzeugdurchmessers umfasst.

26. Handwerkzeugmaschine nach Anspruch 25, dadurch gekennzeichnet, dass sie einen von zwei Spulen (144, 145) umschlossenen Hohlraum (141) zur Aufnahme eines Bohrers (22) hat, von denen die eine Spule (145) an einen Wechselstromkreis (146) und die andere Spule (144) an einen Messkreis (147) angeschlossen ist, so dass eine Kopplung zwischen den Spulen (144, 145) erfolgt, die je nach dem Durchmesser des eingesetzten Bohrers (22) unterschiedliche Messergebnisse im Messkreis (147) induziert.

27. Handwerkzeugmaschine nach Anspruch 25, dadurch gekennzeichnet, dass sie einen Messkörper (148) hat, der mit einem Aufnahmeraum (149) für einen Bohrer (22) versehen ist und eine Spule (150) trägt, die an einen Wechselstromkreis (153) angeschlossen ist und deren veränderte Dämpfung bzw. Induktivität als Mass für den Durchmesser des in den Aufnahmeraum (149) eingebrachten Bohrers (22) dient.

28. Handwerkzeugmaschine nach Anspruch 1, dadurch gekennzeichnet, dass der das Abtastergebnis aufnehmende Messwertgeber (11) als Messwertspeicher und -geber ausgebildet ist, der einen eingegebenen Messwert speichert, bis der auf Null zurückgeführte Taster (9) auf einen neuen Messwert eingestellt wird.

29. Handwerkzeugmaschine nach Anspruch 1, dadurch gekennzeichnet, dass die Abtasteinrichtung (7, 39, 130) an der Einführungsöffnung oder an der Auflagestelle des zu messenden Werkzeugs einen Taststift (151) aufweist, der einen Kontakt (152) dann betätigt, wenn das Werkzeug in die Abtasteinrichtung eingeführt bzw. gegen die Messauflage (19, 51, 74, 90, 140, 148) gepresst wird.

30. Abtasteinrichtung zu einer Handwerkzeugmaschine nach Anspruch 1, dadurch gekennzeichnet, dass sie als zurüstbare Baueinheit (7) ausgebildet ist.

## Claims

1. Hand-operated machine tool, in particular drilling machine, with a scanning device for the diameter of tools which can be used in it, characterized in that it has a scanning device (7, 39), separate from the tool clamping element (4), and a device (20, 21, 28, 31) associated with it for displaying the sensed diameter and/or for controlling its drive motor (2).

2. Hand-operated machine tool according to Claim 1, characterized in that it has a probe (9) with a scale (20) and a reference mark (21), which allow the position of the probe (9) to be read off directly.

3. Hand-operated machine tool according to Claim 2, characterized in that it has a vernier (21) for the precise reading-off of the position of the probe (9) and of the scale (20).

4. Hand-operated machine tool according to Claim 1, characterized in that it has an electronic display (28).

5. Hand-operated machine tool according to Claim 1, characterized in that it has an electronic displacement measuring device (11, 48/50, 76/77 and 83/84) assigned to the probe (9, 56, 64, 85–88).

6. Hand-operated machine tool according to Claim 1, characterized in that it has an optoelectronic probe.

7. Hand-operated machine tool according to Claim 1, characterized in that it has a digital display (28).

8. Hand-operated machine tool according to Claim 1, characterized in that it has a control unit (130) for recording of the scanning result and assigned to the scanning device (7, 39) is an input device (35), with which data assigned to the material to be worked can be input additionally into the control unit (31), and with which the combination of input material data and determined tool diameter can be used to control the drive motor (2) of the hand-operated machine tool.

9. Hand-operated machine tool according to Claim 1, characterized in that a pick-up unit (93, 103, 110, 130) assigned to the scanning device is designed in stages in order to record group-by-group tools having different diameters.

10. Hand-operated machine tool according to one of Claims 2 or 3, characterized in that the scanning scale (20) is made on a probe (9) taken underneath a magnifying glass (8) in the read-off range of the magnifying glass (8) and the magnifying glass (8) is provided with a vernier (21).

11. Hand-operated machine tool according to one of Claims 4 or 5, characterized in that the probe (9, 56, 64) is positioned under the action of a spring (12, 43, 70), which constantly urges it into its zero position, which corresponds the disconnect position for the electrical power supply.

12. Hand-operated machine tool according to Claim 1, characterized in that it can accommodate a battery, which supplies the voltage necessary for the operation of the scanning, measuring and display devices.

13. Hand-operated machine tool according to Claim 1, characterized in that the probe of the scanning device is a wedge-shaped diaphragm (56/57, 64/67).

14. Hand-operated machine tool according to Claim 13, characterized in that the diaphragm (56/57) has an opening (57) which starts as a circle and tapers in wedge shape, arranged symmetrical to a line following the arc of a circle.

15. Hand-operated machine tool according to Claim 14, characterized in that the opening (57) is arranged in a circular disc (56), which can rotate about the point which is the centre point for the circular line of symmetry to the opening (57).

16. Hand-operated machine tool according to Claim 13, characterized in that the opening (67) is made in a plate or a belt (64), which can be displaced rectilineally, and in that the opening (67) – starting from a circle – runs tapering in wedge shape and symmetrical to a straight line lying in the direction of displacement of the belt (64) or of the plate.

17. Hand-operated machine tool according to Claim 1, characterized in that a sliding contact (11, 50, 77), which is taken over a pick-up section (48, 76), is connected to the scanner (9, 56, 64).

18. Hand-operated machine tool according to Claim 1, characterized in that the probe (80–82) of the scanning device is formed by two coaxially (80) borne discs (81, 82), each of which carries two rollers (85/86, 87/88), one of each (85, 87) above the disc bearing (80) and one of each (86, 88) below the disc bearing (80), of which the upper ones (85, 87) and the lower ones (86, 88) are in each case opposite each other at a distance and a wedge (90) being inserted between the two lower rollers (86, 88), one of the tips of said wedge being directed downward.

19. Hand-operated machine tool according to Claim 18, characterized in that a full disc (81) lies with its one surface against a half-disc (82) and carries on the other surface, facing away from this half-disc (82), a pick-up track (83), and in that the spindle (80) joining the two discs (81, 82) is fastened in the half-disc (82) and carries at its end protruding through the other disc (81) a sliding contact (84) for scanning the pick-up track (83).

20. Hand-operated machine tool according to Claim 1, characterized in that it has a comb-like gauge (93) with semicircular recesses (94–97) having different radii and, at the base of which gauge spring-loaded feelers (98–101) protrude into the recesses and are brought by their other, free end into active engagement with switches (102), the latter being brought into closed position if a fitting tool (22) is inserted in one of the recesses (94–97), otherwise being left in open position.

21. Hand-operated machine tool according to Claim 1, characterized in that has a gauge (103) with cup-shaped recesses (104–107) having different diameters, at the base of which gauge contact pins (108) protrude into the recesses (104–107) and are brought by their other, free end into active engagement with a measuring circuit, which in each case can be closed by means of a touched contact pin (108).

22. Hand-operated machine tool according to Claim 1, characterized in that has a gauge (110) with a conical depression (111) which is formed by a number of electrically conductive parts (112, 114–117) with interposed insulating layers (113, 118–120), which subdivide the conical depression (111) into sectors, which are staggered in depth and assigned to electrical signal circuits (121, 126–129).

23. Hand-operated machine tool according to Claim 1, characterized in that it has a gauge (130) with a wedge-shaped depression (131), which is formed by a number of electrically conductive parts (132, 134–137) with interposed insulating layers (133, 138–140), which subdivide the wedge-shaped depression (131) into sectors, which are staggered in depth and assigned to separate electrical signal circuits (121, 126–129).

24. Hand-operated machine tool according to one of Claims 22 or 23, characterized in that the conical or wedge-shaped depression (111, 131) is only subdivided on one half by sectors which are staggered in depth.

25. Hand-operated machine tool according to Claim 1, characterized in that it comprises a device (140–147, 148–153 and 154–156) for the inductive determination of the tool diameter.

26. Hand-operated machine tool according to Claim 25, characterized in that it has a hollow space (141) for accommodating a drill (22), which space is enclosed by two coils (144, 145), of which one coil (145) is connected to an alternating current circuit (146) and the other coil (144) is connected to a measuring circuit (147), so that there is a coupling between the coils (144, 145), which induces different measured results in the measuring circuit (147) depending on the diameter of the inserted drill (22).

27. Hand-operated machine tool according to Claim 25, characterized in that it has a measuring element (148), which is provided with an accommodating space (149) for a drill (22) and carries a coil (150), which is connected to an alternating current circuit (153) and the changed damping or inductance of which serves a measure for the diameter of the drill (22) inserted into the accommodating space (149).

28. Hand-operated machine tool according to Claim 1, characterized in that the pick-up (11) recording the scanning result is designed as a measured value memory and transmitter which stores an input measured value until the probe (9) reset to zero is adjusted to a new measured value.

29. Hand-operated machine tool according to Claim 1, characterized in that the scanning device (7, 39, 130) has at the insertion opening or at the point of rest of the tool to be measured a feeler (151) which actuates a contact (152) when the tool is inserted into the scanning device or is pressed against the measuring rest (19, 51, 74, 90, 140, 148).

30. Scanning device for a hand-operated machine tool according to Claim 1, characterized in that it is designed as an add-on component (7).

**Revendications**

1. Machine-outil portative, notamment perceuse, comportant un dispositif de palpage pour le diamètre des outils susceptibles d'être utilisés dans cette machine, machine caractérisée en ce qu'elle comporte un dispositif de palpage (7, 39) distinct de l'élément (4) de fixation de l'outil, ainsi qu'un dispositif (20, 21; 28,31) relié à ce dispositif de palpage pour afficher le diamètre ainsi palpé, et/ou pour régler le moteur d'entraînement (2) de la machine.

2. Machine-outil portative selon la revendication 1, caractérisée en ce qu'elle comporte un palpeur (9) avec une échelle (20) et un repère de référence (21) qui permettent de lire directement la position du palpeur (9).

3. Machine-outil portative selon la revendication 2, caractérisée en ce qu'elle comporte un vernier (21) pour permettre une lecture précise de la position du palpeur (9) et de l'échelle (20).

4. Machine-outil portative selon la revendication 1, caractérisée en ce qu'elle comporte un affichage électronique (28).

5. Machine-outil portative selon la revendication 1, caractérisée en ce qu'elle comporte un lecteur électronique de course (11, 48/50, 76/77, et 83/84) associé au palpeur (9, 56, 64, 85–88).

6. Machine-outil portative selon la revendication 1, caractérisée en ce qu'elle comporte un palpeur opto-électronique.

7. Machine-outil portative selon la revendication 1, caractérisée en ce qu'elle comporte un affichage numérique (28).

8. Machine-outil portative selon la revendication 1, caractérisée en ce qu'elle comporte une unité de commande (130) destinée à recevoir le résultat du palpage, tandis qu'au dispositif de palpage (7, 39) est associé un dispositif d'introduction (35), grâce auquel les données correspondantes aux matériaux à traiter, peuvent être introduites en supplément dans l'unité de commande (31) et grâce auxquelles, à partir de la combinaison des données ainsi introduites du matériau et du diamètre de l'outil ainsi déterminé, le moteur d'entraînement (2) de la machine-outil portative peut être réglé.

9. Machine-outil portative selon la revendication 1, caractérisée en ce qu'une unité émettrice (93, 103, 110, 130), associée au dispositif de palpage, présente une construction échelonnée pour pouvoir détecter en groupes des outils de diamètres différents.

10. Machine-outil portative selon une des revendications 2 ou 3, caractérisée en ce que l'échelle de palpage (20) est amenée sur un palpeur (9) guidé sous une loupe (8), dans la zone de lecture de cette loupe (8) qui est munie d'un vernier (21).

11. Machine-outil portative selon une des revendications 4 ou 5, caractérisée en ce que le palpeur (9, 56, 64) est placé sous l'action d'un ressort (12, 43, 70) qui le sollicite constamment dans sa position zéro laquelle correspond à la position de coupure de l'alimentation en courant électrique.

12. Machine-outil portative selon la revendication 1, caractérisée en ce qu'elle peut recevoir une batterie délivrant la tension nécessaire pour le fonctionnement du dispositif de palpage, de mesure et d'affichage.

13. Machine-outil portative selon la revendication 1, caractérisée en ce que le palpeur du dispositif de palpage est un diaphragme en forme de coin (56/57, 64/67).

14. Machine-outil portative selon la revendication 13, caractérisée en ce que le diaphragme (56/57) comporte une ouverture (57) partant d'un cercle, se rétrécissant en forme de coin et disposé symétriquement par rapport à une ligne suivant un arc de cercle.

15. Machine-outil portative selon la revendication 14, caractérisée en ce que l'ouverture (57) est disposée dans un disque circulaire (56) qui peut tourner autour du point constituant le centre de la ligne de symétrie circulaire pour l'ouverture (57).

16. Machine-outil portative selon la revendication 13, caractérisée en ce que l'ouverture (67) est disposée dans une plaque ou une bande (64), susceptible d'être déplacée en ligne droite, et que cette ouverture (67) partant d'un cercle, va en se rétrécissant en forme de coin et s'étend symétriquement par rapport à une droite parallèle à la direction de déplacement de la bande (64) ou de la plaque.

17. Machine-outil portative selon la revendication 1, caractérisée en ce qu'un contact glissant (11, 50, 77) est relié au palpeur 69, 56, 64), ce contact étant guidé sur une piste émettrice (48, 76).

18. Machine-outil portative selon la revendication 1, caractérisée en ce que le palpeur (80–82) du dispositif de palpage est constitué de deux disques (81, 82) monté sur le même axe, qui porte chacun deux galets (85/86, 87/88), dont l'un (85, 87) est situé au-dessus de l'axe (80) du disque et l'autre (86, 88) au-dessous de cet axe, les deux galets supérieurs (85, 87) et les deux galets inférieurs (86, 88) étant respectivement placés à une certaine distance l'un en face de l'autre, et un coin (90), dont une pointe est dirigée vers le bas, étant placé entre les galets inférieurs (86, 88).

19. Machine-outil portative selon la revendication 18, caractérisée en ce qu'un dispositif complet (81) s'applique par l'une de ses surfaces contre un demi-disque (82), et porte sur son autre face opposée à ce demi-disque (82) une piste émettrice (83, cependant que l'axe (80) reliant les deux disques (81, 82) est fixé dans le demi-disque (82), et porte à son extrémité faisant saillie à travers l'autre disque (81) un contact glissant (84) pour balayer la piste émettrice (83).

20. Machine-outil portative selon la revendication 1, caractérisée en ce qu'elle comporte un calibre en forme de peigne (93) avec des évidements en demi-cercle (94 à 97) de rayons différents, dans le fond desquels des broches de palpage (98 à 101) sollicitées par des ressorts font saillie à l'intérieur de ces évidements (94 à 97), l'autre extrémité, libre, de ces broches, étant amenée en liaison opérationnelle avec des commutateurs (102), et amenant ceux-ci en position de fermeture lors de l'insertion dans l'un des évidements (94 à 97) d'un outil (22) qui s'y adapte, tandis qu'autrement elles les laissent en position d'ouverture.

21. Machine-outil portative selon la revendication 1, caractérisée en ce qu'elle comporte un calibre (103) avec des évidements en forme de cuvette (104 à 107) ayant des diamètres différents, au fond desquels des broches de contact (108) font saillie à l'intérieur de ces évidements (104 à 107), les autres extrémités libres de ces broches étant amenées en liaison opérationnelle avec un circuit de mesure qui peut être fermé respectivement par une broche de contact (108) avec laquelle a eu lieu un contact.

22. Machine-outil portative selon la revendication 1, caractérisée en ce qu'elle comporte un calibre (110) avec une cavité conique (11), qui est constituée de plusieurs parties électriquement conductrices (112, 114 à 117) avec des couches isolantes (113, 118 à 120) placées entre elles qui subdivisent cette cavité conique (111) en secteurs étagés en profondeur et qui sont associés à des circuits électriques de signaux (121, 126 à 129).

23. Machine-outil portative selon la revendication 1, caractérisée en ce qu'elle comporte un calibre (130) avec une cavité en forme de coin (131) qui est constitué de plusieurs parties électriquement conductrices (132, 134 à 137) avec des couches isolantes (133, 138 à 140) placées entre elles et qui subdivisent cette cavité en forme de coin (131) en secteurs étagés en profondeur, qui sont associés à des circuits électriques de signalisation (121, 126 à 129) distincts.

24. Machine-outil portative selon une des revendications 22 ou 23, caractérisée en ce que la cavité conique ou bien en forme de coin (111, 131) n'est subdivisée que sur un demi-côté en secteurs qui sont étagés en profondeur.

25. Machine-outil portative selon la revendication 1, caractérisée en ce qu'elle comprend un dispositif (140 à 147, 148 à 153, et 154 à 156) pour la détermination inductive du diamètre de l'outil.

26. Machine-outil portative selon la revendication 25, caractérisée en ce qu'elle comporte un espace creux (141), entouré par deux bobines (144, 145), pour recevoir un foret (22), l'une (145) de ces bobines étant raccordée à un circuit à courant alternatif (146) tandis que l'autre bobine (144) est raccordée à un circuit de mesure (147), de sorte qu'il en résulte un couplage entre les bobines (144, 145) qui selon le diamètre du foret (22) mis en place induit dans le circuit de mesure (147) des résultats de mesure différents.

27. Machine-outil portative selon la revendication 25, caractérisée en ce qu'elle comporte un corps de mesure (148) muni d'un espace de réception (149) pour un foret (22) et qui porte une bobine (150) qui est raccordée à un circuit de courant alternatif (153), et dont l'amortissement ou bien le coefficient d'auto-induction modifié est utilisé comme mesure pour le diamètre du foret (22) introduit dans l'espace de réception (149).

28. Machine-outil portative selon la revendication 1, caractérisée en ce que l'émetteur de valeur de mesure (11) recevant le résultat du palpage, revêt la forme d'une mémoire de valeur de mesure et d'un émetteur de valeur de mesure qui mémorisent une valeur de mesure introduite jusqu'à ce que le palpeur (9) ramené à zéro soit réglé sur une nouvelle valeur de mesure.

29. Machine-outil portative selon la revendication 1, caractérisée en ce que le dispositif de palpage (7, 39, 130) comporte à l'entrée d'introduction ou bien à l'emplacement de dépôt de l'outil à mesurer, une broche de palpage (151) qui actionne alors un contact (152) lorsque l'outil est introduite dans le dispositif de palpage ou bien est appliquée contre l'appui de mesure (19, 51, 74, 90, 140, 148).

30. Dispositif de palpage destiné à une machine-outil portative selon la revendication 1, caractérisée en ce que ce dispositif revêt la forme d'une unité modulaire (7) susceptible d'être adjointe à la machine.

0 106 186

FIG. 1

FIG. 2

11

FIG. 3

FIG. 4

FIG. 5

FIG. 5a

FIG. 6

FIG. 7

FIG. 8

FIG. 9

FIG. 10

FIG. 11

FIG. 12